# EUROPÄISCHE PATENTSCHRIFT

(11) **EP 1 041 765 B1**
(45) Veröffentlichungstag und Bekanntmachung des Hinweises auf die Patenterteilung: **29.07.2009**
(21) Anmeldenummer: 00106867.5
(22) Anmeldetag: 30.03.2000
(51) Int. Cl.: H04L 5/02, H04J 3/16

(54) **Multiplexverfahren für Mehrträgersignale in einem vermaschten Netwerk**
Multiplexing methods for multicarrier signals in a meshed network
Procédés de multiplexage pour signaux multiporteuse dans un réseau maillé

(30) Priorität: 30.03.1999 DE 19914324
(43) Veröffentlichungstag der Anmeldung: 04.10.2000
(73) Patentinhaber: iAd Gesellschaft für Informatik, Automatisierung und Datenverarbeitung mbH, 90613 Grosshabersdorf (DE)
(72) Erfinder: Hampel, Hermann, Dipl.-Ing., 90613 Grosshabersdorf (DE); Bumiller, Gerd, Dipl.-Ing., 90768 Fürth (DE)
(74) Vertreter: Dreykorn-Lindner, Werner

(56) Entgegenhaltungen:
- EP-A- 0 208 021
- DE-A- 19 517 966
- DE-A- 19 643 970
- DE-A- 19 726 009
- US-A- 5 654 960

## Beschreibung

Die Erfindung betrifft in erster Linie ein Kommunikationssystem zur Datenübertragung in einem vermaschten Netzwerk unter Verwendung eines Verfahrens mit Multiträgerübertragung, bei dem das Sendesignal um eine Synchronisierinformation ergänzt wird und bei dem empfangsseitig die Blöcke der Codesymbole synchronisiert werden.

Die Konzeption von Multiträgersystemen zur digitalen Übertragung von Daten, hat in den letzten Jahren immer mehr an Bedeutung gewonnen. Insbesondere das OFDM-Verfahren (Orthogonal Frequency Division Multiplexing) hat sich als zuverlässiges und kostengünstiges Verfahren erwiesen, welches als Übertragungsverfahren zur Anwendung in dem digitalen Audio-Rundfunkstandard DAB (Digital Audio Broadcasting) und dem digitalen terrestrischen Fernsehrundfunkstandard DTTB (Digital Terrestrial Television Broadcasting) benutzt wird. Bei dem OFDM-Verfahren werden seriell eingegebene Symbolströme in einen vorgegebenen Einheitsblock aufgeteilt. Die aufgeteilten Symbolströme jedes Einheitsblocks werden in N parallele Symbole umgewandelt. Die N parallelen Symbole werden durch Multiplexbildung und Addition zusammengefaßt, indem mehrere Unterträger nach Maßgabe eines inversen schnellen Fourier-Transformationsalgorithmus IFFT (Inverse Fast Fourier Transformation) mit jeweils unterschiedlichen Frequenzen verwendet werden, und die so addierten Daten werden über den Kanal übertragen. Dadurch wird erreicht, daß N parallele Symbole als ein Einheitsblock definiert sind, und jeder Unterträger des Einheitsblocks weist eine Orthogonalität (sowohl für zeitlich aufeinanderfolgende als auch spektral benachbarte Symbole) bezüglich ISI (Intersymbol-Interferenz) und ACI (Nachbarkanalinterferenz) auf. Verglichen mit einem herkömmlichen Einzelträger-Übertragungsverfahren kann das OFDM-Verfahren eine durch Mehrwege-Schwund (multi-path fading) in einem Empfangssignal verursachte Zwischensymbolstörung bzw. -Interferenz ISI (Inter-Symbol Interference) vermindern, indem es dieselbe Symbolübertragungsrate aufrechterhält und die Symbolperiode um die Anzahl an Unterkanälen (N) erhöht. Insbesondere wird beim OFDM-Verfahren ein Schutzintervall (Guard-Interval) zwischen die übertragenen Symbole eingefügt.

Im Gegensatz zum Frequenzmultiplexverfahren FDM (Frequency Division Multiplexing) hat das OFDM-Verfahren die Eigenschaft, dass die Spektren jedes Unterkanals überlagert werden, um diesem zu einer höheren Bandeffizienz zu verhelfen. Ein Nachteil des OFDM-Verfahrens besteht darin, dass aufgrund der unterschiedlichen Impulsdauern der Sende- und Empfangsfilter keine optimale Rauschanpassung im Sinne der Matched-Filterung vorliegt.

Der besondere Vorteil des OFDM-Verfahrens liegt in der äußerst einfachen Realisierung; aufgrund der rechteckförmigen Sende- und Empfangsfilter-Impulsantworten reduzieren sich die Filterbänke auf einfache IDFT- und DFT-Operationen, die mit dem FFT-Algorithmus realisiert werden können. Weiterhin sind keinerlei Kanalkorrekturmaßnahmen erforderlich, solange die Dauer der Kanalimpulsantwort unterhalb der Länge des Guard-Intervalls liegt. Außerdem weist das Spektrum eine Welle mit einer Rechteckform auf, und die elektrische Leistung ist gleichmäßig bei jedem Frequenzband verteilt, was einen Einfluß durch die Gleichkanalstörung verhindert. Das OFDM-Verfahren wird meist mit Modulationsarten wie Pulsamplitudenmodulation PAM, Frequenzumtastung FSK (Frequency Shift Keying), Phasenumtastung PSK (Phase Shift Keying) und/oder Quadraturamplitudenmodulalion (QAM) kombiniert.

Beispielsweise ist aus der US 5,345,439 A1 eine Signalverarbeitungseinrichtung bekannt, bei der für eine universelle Anwendung verschiedene Modulationsformate in einem Gerät realisiert sind. In der US 4,313,197 A1 ist eine Einrichtung zum Multiplexen und Demultiplexen von Signalen, insbesondere Sprachsignalen, beschrieben, bei der eine Fourier-Transformation benutzt wird. Eine Anwendung des OFDM-Verfahrens bei einer optischen Übertragung ist aus Olofsson, L., et al.: "Design of OFDM Systems at High Power Levels", Journal of Optical Communications, 17, 1996, 3, Seiten 95 bis 97, bekannt.

Weiterhin ist in der DE 43 10 031 A1 ein Verfahren zur Korrektur der Phasenamplitude eines breitbandigen Empfangssignals erläutert, bei dem nach dem COFDM-Verfahren die verwendeten Einzelträgerfrequenzen phasenmoduliert sind. Es erfolgt bei diesem Verfahren eine Synchronisation der Datenblöcke untereinander in Zeitrichtung.

Grundlagen zu diesen Techniken und Verfahren sind dem Fachbuch "Nachrichtenübertragung" von Dr. Ing. Karl Dirk Kammermeyer, B.G. Teubner, Stuttgart, 1992, insbesondere Seiten 68 bis 70, 372, 378, 379 und 606 bis 613, zu entnehmen.

Ein in besonderer Weise ausgestaltetes System zur digitalen Informationsübertragung mit einem Mehrträgerübertragungsverfahren ist aus der DE 196 38 654 A1 der Anmelderin bekannt. Dieses System weist eine Einrichtung zur Erzeugung eines Sendesignals mit einem Modul zur Trägermodulation auf, dem kanalcodierte parallele Codesymbole eines Eingangssignals zugeführt sind und in dem die Subträger mit den Codesymbolen mittels differentieller Codierung in Frequenzrichtung belegt werden. Dem Modul zur Trägermodulation sind ein Fehlercodierungs- und/oder Verschachtelungsmodul vorgeschaltet und ein Parallel/Seriell-Umsetzer nachgeschaltet. Schließlich sind sendeseitig Mittel zur Erzeugung einer Synchronisierinformation nach Maßgabe einer Präambel für jeden erzeugten Block der Codesymbole und ein Glied zur Erzeugung einer Sendepause zwischen aufeinanderfolgenden Blöcken vorgesehen.

Weiterhin weist das System eine Empfangseinrichtung für das empfangene Mehrträger-Sendesignal, in welchem die Blöcke gegebenenfalls zeitdiskontinuierlich aufeinander folgen, mit einem Demodulator auf, in dem die Phase der komplexen Subträgerkoeffizienten differenziert wird. Im einzelnen wird das empfangene Sendesignal einem Analog/Digitalumsetzer mit nachfolgendem Seriell/Parallel-Wandler, der dem Demodulator vorgeschaltet ist, zugeführt, wobei dem Demodulator ein Fehlerdecodierungs- und/oder Entschachtelungsmodul nachgeschaltet ist/sind. Schließlich sind empfangsseitig Mittel zur Entfernung der Sendepause, zur Detektion der den jeweiligen Blöcken jeweils zugeordneten Präambeln und zur Synchronisierung der jeweiligen Blöcke vorgesehen.

Das in der DE 196 38 654 A1 der Anmelderin vorgeschlagene Verfahren zur Erzeugung eines Sendesignals, bei dem zur Mehrträgerübertragung jeweils Subträger - mit kanalkodierten parallelen Codesymbolen eines Eingangssignals - mittels differentieller Codierung in Frequenzrichtung moduliert werden und das Sendesignal um eine Synchronisierinformation ergänzt wird, ist **dadurch gekennzeichnet, dass** die Codesymbole vor der differentiellen Codierung fehlercodiert und/oder verschachtelt werden, dass nach der differentiellen Codierung mittels einer Parallel/Seriell-Wandlung ein serielles Ausgangssignal erzeugt wird, dass jedem Block der Codesymbole als Synchronisierinformation eine Präambel zur Blocksynchronisierung zugeordnet wird, und dass jeder Block der Codesymbole nach der differentiellen Codierung um eine Sendepause ergänzt wird.

Weiterhin wird in der DE 196 38 654 A1 der Anmelderin ein Demodulationsverfahren für ein empfangenes Mehrträger-Sendesignal vorgeschlagen, in welchem Codesymbole Subträgern mittels differentieller Codierung in Frequenzrichtung aufmoduliert sind, und in welchem Blöcke zeitdiskontinuierlich aufeinander folgen können. Im einzelnen wird die Phase der komplexen Subträgerkoeffizienten dadurch differenziert und werden die Blöcke der Codesymbole dadurch synchronisiert, dass vor der Differenzierung das empfangene Sendesignal einer Analog/Digitalumsetzung mit anschließender Seriell/Parallel-Wandlung unterzogen wird, dass vor der Differenzierung eine zwischen Blöcken angeordnete Sendepause entfernt wird, dass nach der Differenzierung eine Fehlerdecodierung oder Entschachtelung erfolgt, und dass die jeweiligen, den Blöcken zugeordneten Präambeln jeweils detektiert und die Blöcke jeweils synchronisiert werden.

Um aufwendige Verfahren zur Trägerphasen- und Abtastphasensynchronisation zu umgehen, erfolgt in der DE 196 38 654 A1 der Anmelderin als wesentlicher Grundgedanke die Zuordnung der binären Codesymbole auf die Subträger durch eine differentielle Codierung in Richtung der Subträger, also in Frequenzrichtung. Im Gegensatz hierzu erfolgt dies beim Stand der Technik durch differentielle Modulation in Zeitrichtung. Zusammen mit einer Kanalcodierung und einer Codesymbolverwürfelung entlang der Träger kann bei der DE 196 38 654 A1 der Anmelderin auf eine Trägerphasensynchronisation gänzlich verzichtet werden und die zulässigen Toleranzen der Abtastphasensynchronisation sind hoch.

Weiterhin ist aus der DE 197 58 014 A1 eine spezielle Rahmensynchronisationsvorrichtung für ein digitales Kommunikationssystem, welches das OFDM-Verfahren benutzt, bekannt, wobei die Rahmensynchronisation nach Maßgabe eines TPS-Pilotsignals aus verschiedenen Pilotsignalen erfolgt und unter Verwendung der Eigenschaft durchgeführt wird, dass das Synchronisationswort bei jedem Rahmen in TPS-Blöcken invertiert ist. Das TPS-Pilotsignal wird beim Stand der Technik verwendet, um auf die Übertragung selbst bezogene Information, beispielsweise durch einen α-Wert eines QAM-Konstellationsmusters definierte Modulationsinformation, Hierarchieinformation, Schutzintervallinformation, Information über die innere Coderate, Information über die Rahmenzahl, etc., an die Empfangsseite zu übertragen.

Im einzelnen umfaßt das in der DE 197 58 014 A1 beschriebene Rahmensynchronisationsverfahren folgende Schritte:
a) Berechnen von Phasenwerten von TPS-Pilotwerten innerhalb eines Symbols gemäß von einer Senderseite empfangenen In-Phase- und Quadratur-Phase-Kanalsignalen;
b) Berechnen von Phasendifferenzen aus den Phasenwerten der TPS-Pilotwerte eines vorhergehenden Symbols und den entsprechenden Phasenwerten der TPS-Pilotwerte des aktuellen Symbols, die im Schritt a) berechnet wurden;
c) Durchführen einer D-BPSK-Demodulation für die im Schritt b) erhaltene Phasendifferenz;
d) Bestimmen, ob alle im Schritt c) demodulierten TPS-Pilotwerte identisch zueinander sind, und Ausgeben eines repräsentativen TPS-Pilotwertes eines Symbols, falls alle demodulierten TPS-Pilotwerte als identisch zueinander bestimmt werden;
e) Bestimmen, ob die aktuelle Position einer Synchronisationswortposition entspricht, durch Vergleichen des repräsentativen TPS-Pilotwertes eines Symbols entsprechend dem vorhergehenden Rahmen mit dem repräsentativen TPS-Pilotwert eines Symbols entsprechend dem aktuellen Rahmen; und
f) Zählen von Symbolen, falls die aktuelle Position der Synchronisationswortposition im Schritt e) entspricht, und Erzeugen eines Rahmensynchronsignals gemäß dem Zählwert.

Die zugehörige Rahmensynchronisationsvorrichtung weist folgende Mittel auf:
- Phasenberechnungsmittel zum Berechnen von Phasenwerten von TPS-Pilotwerten innerhalb eines Symbols gemäß von einer Senderseite empfangenen In-Phase- und Quadratur-Phase-Kanalsignalen;
- D-BPSK-Dekodiermittel zum Durchführen einer D-BPSK-Demodulation für die Phasenwerte der von den Phasenberechnungsmitteln gelieferten TPS-Pilotwerte und zum Ausgeben der TPS-Pilotwerte innerhalb das demodulierten Symbols;
- Steuersignal-Erzeugungsmittel, um die demodulierten TPS-Pilotwerte miteinander in Symboleinheiten zu vergleichen und ein Steuersignal gemäß dem Vergleichsergebnis auszugeben; und
- Rahmensynchronisationsmittel zum Bestätigen einer Synchronisationswortposition durch Vergleichen des TPS-Pilotwortes eines Symbols das vorhergehenden Rahmens mit dem TPS-Pilotwert des entsprechenden Symbols des aktuellen Rahmens gemäß dem von den Steuersignal-Erzeugungsmitteln gelieferten Steuersignal, und zum Ausgeben eines Rahmensynchronsignals.

Wie die vorstehende Würdigung des Standes der Technik aufzeigt, ist das gleichzeitige Senden mehrerer Sender zur Überlagerung der Daten bekannt und wird bei DAB (Digital Audio Broadcasting) als SFN (Single Frequency Network) verwendet. Hierbei handelt es sich um eine andauernde Übertragung, wobei die Sender ihre Daten über verschiedene Übertragungsmedien erhalten und sich synchronisieren. Auf der anderen Seite ist die Datenübertragung mit Hilfe eines OFDM-Verfahrens (Orthogonal **F**requency Division Multiplex) auch in einem Zeitrahmen mit Zeitschlitzen aus der Fachliteratur bekannt (s.o. Fachbuch "Nachrichtenübertragung" von Dr. Ing. Karl Dirk Kammermeyer, insbesondere Seite 613 ff).

Bei drahtgebundenen oder drahtlosen Punkt zu Mehrpunkt-Übertragungsverfahren, wie beispielsweise passiven optischen Netzen, Koaxialkabelnetzen, Automatisierungssystemen oder Funksystemen mit Rückkanal, Satellitenverbindungen kommunizieren mehrere Teilnehmer mit einer Zentrale. So ist aus der DE 196 43 970 A1 ein Verfahren für die Signalübertragung in einem Netz für Punkt-Zu-Mehrpunkt-Verbindungen, bei dem der Zugriff der einzelnen Stationen auf ein Übertragungsmedium durch ein TDM/TDMA-Verfahren erfolgt. Hierzu werden in Richtung Punkt-Zu-Mehrpunkt von einer Kopfstation TDM-Signale und in umgekehrter Richtung von einzelnen Mehrpunkt-Stationen burstartig Signale ausgesendet werden, die an einem oder mehreren Splittern zu einem TDMA-Signal für die Kopfstation zusammengefügt werden. Diese allgemein als Bursts bezeichneten Blöcke von Nutzdaten sind nicht exakt zueinander synchron und treffen im Empfänger nach unterschiedlicher Laufzeit mit unterschiedlicher Signalamplitude/Taktphase ein. Jedem Datenburst sind Guard- und Run-In-Bits vorangestellt, wobei die Guard-Bits das Überlagern zweier Datenbursts verhindern und die Run-In-Bits zu Synchronisation im Empfänger dienen. Da die Entfernung zwischen der Zentrale und der Teilnehmerstation unbekannt ist, muß jede Teilnehmerstation bei Inbetriebnahme eingemessen werden, wozu in einem Einmessfenster des zur Verfügung stehenden Datenübertragungsrahmens Einmessdaten (Datenbursts mit synchronen oder asynchronen Daten) gesendet werden. Im einzelnen werden die burstartigen Signale der Mehrpunkt-Stationen von einem Splitter zu einem Rahmen zusammengefasst, der in einem Teil für synchrone Daten und in einem anderen Teil für wahlweise asynchrone Nutzdaten oder Einmessdaten vorgesehen ist.

In Weiterbildung dieses Signalübertragungsverfahrens für optische Netze - bei dem die Bursts an wenigstens einem Splitter zu einem TDMA-Signal für die Kopfstation zusammengefasst werden und sich die übertragenen Nutzdaten aus den einzelnen den Mehrpunkt-Stationen zugeordneten und in einem Rahmen zusammengefassten Kontrollkanälen und Datenkanälen zusammensetzen - wird in der DE 197 26 009 A1 vorgeschlagen, dass die Kontrollkanäle und die Datenkanäle für jede Mehrpunkt-Station getrennt übertragen werden. Hierdurch können die Übertragungskapazitäten, d.h. die Anzahl der Datenkanäle pro Station während des Betriebs verändert werden, ohne dass eine Verschiebung der Kontrollkanäle notwendig ist und es kann ein sogenanntes bandwidth-on-demandfähiges Nachrichtenübertragungssystem aufgebaut werden.

Schließlich sind Nachrichtenübertragungssysteme bekannt, bei denen die Information über das Medium Energiekabel verteilt wird. Die Topologie der Übertragungsstrecke zwischen Trafostation und Hausanschlußkasten ist in diesen sogenannten PLC-Systemen (Power Line Communication) meist eine Punkt-zu-Mehrpunkt-Struktur mit der Trafosstation als Knotenpunkt. In der Regel erfolgt die Datenübertragung unter Benutzung der CPFSK (phase continuous frequency shift keying) und der Netzfrequenz als Referenzsignal zur Synchronisierung einer FSK-Übertragung im korrelativ auswertenden Empfänger. Wie beispielsweise in der DE 197 04 018 A1 beschrieben ist, kann das Datentelegramm eine vorangestellte 4-Bit-Trainingssequenz, eine 16-Bit Präambel und einen Nachrichtenteil aufweisen. Um auch bei starken Netzfrequenzschwankungen eine ausreichend gute Synchronisation für die Auswertung langer Datentelegramme zu erreichen, wird sendeseitig eine von der Nennfrequenz durch Vervielfachung abgeleitet Baudrate verwendet. Die Berechnung des Sendebeginns erfolgt auf der Grundlage der aufbereiteten aktuellen Netzfrequenz und einer gewählten und festgelegten Nennbaudrate. Wird eine Präambel oder ein Teil davon gefunden, so wird aus der Relation der Korrelatorergebnisse ein optimaler zeitlicher Synchronpunkt ermittelt und zur weiteren Prüfung des empfangenen Bitstroms wird die Bitdauer (Bitbreite) fest auf die Nennbitbreite der sendeseitig eingestellten Baudrate gesetzt. Damit wird für die Erfassung des restlichen Telegramms eine Unabhängigkeit von der tatsächlichen Netzfrequenz erreicht. Ein weiteres Verfahren und eine Einrichtung zur Übertragung digitaler Informationen über elektrische Energieverteilnetze unter Benutzung bandspreizender Modulationsverfahren (Spread Spectrum Techniques) ist in der DE 44 23 978 A1 auf der Grundlage der europäischen Norm EN 50 061-1/1991 beschrieben.

Wie die vorstehende Würdigung des Standes der Technik aufzeigt, sind unterschiedlich ausgestaltete Nachrichtenübertragungssysteme für unterschiedliche Anwendungen bekannt. In der Regel erfordern jedoch die bekannten Systeme aufwendige Synchronisationseinrichtungen, insbesondere um zu vermeiden, dass während des Betriebs die Synchronität verlorengeht und sind zudem für eine Umkonfiguration bei Störungen innerhalb des Netzes nicht geeignet. In der Powerline-Kommunikation existieren im Bereich der Niederspannungsversorgung teilweise sehr vermaschte Netze. Zur hochbitratigen Datenübertragung wird ein effizientes bidirektionales Mehrfachzugriffsverfahren derart benötigt, dass die zur Verfügung stehende Datenrate dynamisch und gegebenenfalls asymmetrisch an die Teilnehmer verteilt. Zur Erhöhung der Reichweite werden die Daten, wenn notwendig von Zwischenverstärkerstationen (Repeatern) wiederholt. Da eine flexible Netzstruktur von großem Nutzen ist und diese einen hohen kostenmäßigen Aufwand für die Synchronisation erfordert, konnte bisher die Funktionssicherheit von Nachrichtenübertragungssystemen nicht entscheidend verbessert werden. Besonders bedeutsam ist dies, weil sowohl die Telekommunikations-Industrie als auch die Computerindustrie als äußerst fortschrittliche, entwicklungsfreudige Industrien anzusehen sind, die sehr schnell irgendwelche Verbesserungen und Vereinfachungen aufgreifen und in die Tat umsetzen.

Der Erfindung liegt gegenüber den bekannten Nachrichtenübertragungs- bzw. Kommunikationssystemen die Aufgabe zugrunde, dieses derart auszugestalten, dass - bei blockweiser Übertragung von Daten - in der Teilnehmereinrichtung auch das Empfangen und Auswerten von zeitlich versetzten und überlagerten Rahmensynchronisationen ermöglicht wird.

Diese Aufgabe wird, durch die Merkmale des Anspruchs 1 gelöst.

Das erfindungsgemäße Kommunikationssystem weist den Vorteil auf, dass auf überraschend einfache Art und Weise sich diese Daten überlagern und eine Gleichwelle entsteht, welche die Zuverlässigkeit der Übertragung erhöht und gleichzeitig gegenüber dem einzelnen Senden der Daten Übertragungszeit spart. Im Vergleich zu bekannten DAB-Systemen werden beim erfindungsgemäßen Kommunikationssystem die Bursts auf dem gleichen Medium gesendet, auf dem diese auch empfangen wurden. Durch die erfindungsgemäße Kombination von OFDM/TDM-Verfahren wird eine höhere Bandeffizienz und eine Verringerung der Zwischensymbolinterferenz, bei gleichzeitig optimiertem Schutzintervall und eine noch weiter verbesserte Synchronisation erreicht. Im Vergleich zu TDM-Verfahren ist es nicht erforderlich, in der Zentrale Laufzeitberechnungen durchzuführen und eine Korrektur zum Ausgleich von Laufzeitschwankungen vorzunehmen.

Bei einer bevorzugten Ausgestaltung der Erfindung gemäß Patentanspruch 3, enthält der Zeitrahmen einen Zeitschlitz, in welchem die Teilnehmer mit einem Zufallszugriffsverfahren der Zentrale einen Sendewunsch signalisieren können.

Diese Ausgestaltung der Erfindung weist die Vorteile auf, dass die sonst erforderliche Abfrage der Teilnehmereinrichtungen durch die Zentrale entfallen und die Anzahl der Datenkanäle pro Teilnehmereinrichtung im Betrieb verändert werden kann, so dass es möglich ist, ein dynamisches/asymmetrisches Kommunikationssystem aufzubauen. Insbesondere können Umkonfigurationen schnell durchgeführt werden und es wird ein günstiges Verhältnis zwischen Übertragungskapazität und Übertragungsrate erzielt, insbesondere da die Dauer des für die Signalisierung des Sendewunsches reservierten Zeitschlitzes klein ist. Da in der Regel kaum zwei Teilnehmer gleichzeitig diesen Zeitkanal belegen, ist der Einfluß der Zugriffszerstörung zu vernachlässigen.

In Weiterbildung der Erfindung ist, gemäß Patentanspruch 6, der Zeitschlitz für den Sendewunsch zeitlich den Zeitschlitzen für die Nutzdaten nachgeordnet.

Diese Weiterbildung der Erfindung weist den Vorteil auf, dass eine Optimierung zwischen Länge des Schutzintervalls und auftretendem Jitter vorgenommen werden kann. Wie umfangreiche Messungen im erfindungsgemäßen Kommunikationssystem nämlich aufzeigten, läuft der Taktjitter während des Zeitrahmens linear hoch, d.h. dieser ist um so größer je weiter weg - zeitlich gesehen - die Flanken der Datenbits vom Zeitrahmenanfang liegen.

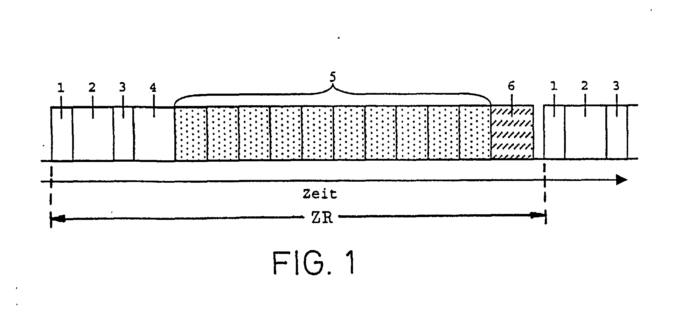

Weitere Vorteile und Einzelheiten lassen sich der nachfolgenden Beschreibung unter Heranziehen des in der FIG. 1 dargestellten Zeitmultiplexrahmens entnehmen.

In der FIG. 1 ist ein Zeitrahmen ZR für das Zeitschlitzverfahren dargestellt. Dieser Zeitrahmen ZR wird periodisch aneinandergereiht. Als Mehrfachzugriffsverfahren wurde ein TDMA-Zeitschlitzverfahren (Time Division Multiple Access) mit Reservierungstechnik gewählt. Dadurch kann zentral eine dynamische/asymmetrische Steuerung erfolgen.

Diese Zentrale, im nachfolgenden als Master bezeichnet, weist den angeschlossenen Teilnehmern in den Steuerungsdaten Senderechte zu. Diese Steuerungsdaten müssen zuverlässig an alle Teilnehmer übertragen werden. Da nicht alle Teilnehmer den Master mit ausreichender Burstamplitude bzw. direkt empfangen können, werden diese Steuerungsdaten von allen Netzverzweigungs-und/oder Zwischenverstärkereinrichtungen, im nachfolgenden Repeater genannt, wiederholt. Beim erfindungsgemäßen Kommunikationssystem wird von den Repeatern verlangt, dass sie den Master direkt empfangen können. Jeder Zeitrahmen beginnt mit einer vom Master gesendeten Rahmensynchronisation 1, durch die alle Teilnehmer zeitlich synchronisiert werden, welche den Master direkt empfangen können. Im nächsten Zeitschlitz sendet der Master die Steuerungsdaten 2 mit den Senderechten für alle Teilnehmer.

Insbesondere beim Anwendungsfall PLC-System werden gegebenenfalls auch mehrere Repeater benötigt und manche Teilnehmer, welche den Master nicht direkt empfangen, können auch mehrere Repeater empfangen. Da sich diese Teilnehmer nicht auf die Rahmensynchronisation des Masters synchronisieren können, senden die Repeater eine eigene Rahmensynchronisation 3, die aber von der Rahmensynchronisation des Masters unterschieden werden kann. Hierzu weisen die Reapeater eine mit einer Blocksynchronisations- und Bursterkennungseinrichtung verbundene Steuereinrichtung auf. Da es für den Teilnehmer nicht wichtig ist, sich auf einen bestimmten Repeater zu synchronisieren, können die Repeater diese Rahmensynchronisation 3 gleichzeitig senden. Der Teilnehmer empfängt dann die teilweise mit einem zeitlichen Versatz überlagerten Rahmensynchronisationen. Durch die Anwendung des Multiträgerverfahrens ist im Empfänger dieser zeitliche Versatz nicht störend.

Nach der Rahmensynchronisation senden alle Repeater die Steuerungsdaten 4, welche sie zuvor von dem Master empfangen haben. Auch hier empfangen die Teilnehmer die mit einem zeitlichen Versatz überlagerten Steuerungsdaten. Bei der Verwendung eines OFDM-Verfahren (Orthogonal Frequency Division Multiplex) zur Datenübertragung kann die Überlagerung der Daten ohne Verluste genutzt werden. Diese Art der Datenübertragung wird Gleichwelle, oder auch SFN (Single Frequency Network) genannt.

Die Vorteile beim erfindungsgemäßen Kommunikationssystem, bei dem die Gleichwelle nur in einzelnen Zeitschlitzen verwendet wird, sind einerseits die Zeitersparnis, nämlich dadurch dass die Repeater die Rahmensynchronisation und die Steuerungsdaten nicht nacheinander senden müssen, und anderseits der Störabstandsgewinn durch die Überlagerung der verschiedenen Sendesignale. Durch die Veränderung des Guard-Intervalls kann eine flexible Anpassung an die Echolaufzeiten im vermaschten Netz erfolgen, so dass ein guter Kompromiß bezüglich ISI und ACI erzielt werden kann. Der Einfluß entfernungsabhängiger Störungen, wie beispielsweise Jitter, fällt beim erfindungsgemäßen Kommunikationssystem infolge des mehrfachen Empfangs identischer Informationen kaum ins Gewicht.

Die Teilnehmer und der Master senden die Daten in Blöcken in den vom Master über die Senderechte zugewiesenen Zeitschlitzen 5. Auf diese Weise können die Datenraten dynamisch und auch asymmetrisch an die einzelnen Teilnehmer verteilt werden. Auch bei diesen Datenblöcken kann wegen den Reflexionen des Übertragungskanals das OFDM-Verfahren verwendet werden.

Zur Signalisierung eines Sendewunsches an den Master, der daraufhin dann Senderechte erteilt, kann ein Zeitschlitz 6 im Zeitrahmen ZR vorgesehen werden. In diesem Zeitschlitz 6 konkurrieren die Teilnehmer um die Zugriffsberechtigung nach einem Zufallsverfahren, wie zum Beispiel Slotted Aloha. Nach der Übertragung des Sendewunsches erfolgt die Kommunikation zwischen Master und Teilnehmer über die reservierten Zeitschlitze 5.

Eine direkte Teilnehmer - Teilnehmer Kommunikation ist bei dem oben beschriebenen Kommunikationssystem nicht vorgesehen.

Alle dargestellten und beschriebenen Ausführungsmöglichkeiten, sowie alle in der Beschreibung und/oder der Zeichnung offenbarten neuen Einzelmerkmale und ihre Kombination untereinander, sind erfindungswesentlich. Beispielsweise kann in mindestens einer Netzverzweigungs- und/oder Zwischenverstärkereinrichtung ein mit der Steuereinrichtung verbundener Rahmengenerator vorgesehen werden, wodurch bei Ausfall der Zentrale diese die Netzsteuerungsfunktionen übernehmen kann; es kann im Burst eine Information zur Kennzeichnung des Nutzinhalts bzw. des Senders eingebettet werden, so dass eine Authentizitätsprüfung einschließlich einer Wegesteuerung möglich ist u.a.

## Patentansprüche

1. Kommunikationssystem zur Datenübertragung in einem vermaschten Netzwerk mit einer Zentrale und angeschlossener Teilnehmer und unter Verwendung eines Verfahrens mit Multiträgerübertragung,
- bei dem in der Zentrale ein Sendesignal um eine Synchronisierinformation(1) ergänzt wird,
- bei dem empfangsseitig die Blöcke der Codesymbole synchronisiert werden,
- bei dem die Signalübertragung in Richtung Punkt-zu-Mehrpunkt durch TDM-Signale und in Richtung Mehrpunkt-zu-Punkt durch Burst-Signale erfolgt
- bei dem mindestens eine Netzverzweigungs- und/oder Zwischenverstärkereinrichtung im Netzwerk vorgesehen ist, welche eine mit einer Blocksynchronisations- und Bursterkennungseinrichtung verbundene Steuereinrichtung aufweist und
- bei dem die Netzverzweigungs- oder Zwischenverstärkereinrichtungen eine eigene Rahmensynchronisation (3) erzeugen, die von der Rahmensynchronisation der Zentrale unterschieden werden kann, die Bursts zu einem TDMA-Signal zusammenfassen und danach gleichzeitig im gleichen Frequenzbereich auf dem gleichen Medium wieder senden, wodurch der jeweilige Teilnehmer dann die teilweise mit einem zeitlichen Versatz überlagerten Rahmensynchronisationen (1, 3) empfängt.

2. Kommunikationssystem nach Anspruch 1, **dadurch gekennzeichnet, dass** eine einzige Zentrale im Kommunikationssystem vorgesehen ist, welche in einem vom Rahmengenerator erzeugten Zeitrahmen (ZR) Steuerungsdaten und Nutzdaten (2, 5) sendet, die von den Netzverzweigungs- und/oder Zwischenverstärkereinrichtungen empfangen und danach von diesen gleichzeitig gesendet werden, wobei im Zeitrahmen (ZR) vor den Steuerungsdaten (2, 4) von der Zentrale und von den Netzverzweigungs-und/oder Zwischenverstärkereinrichtungen eine Rahmensynchronisation (1, 3) eingefügt wird, wodurch unterschieden werden kann, ob die Rahmensynchronisation (1, 3) von der Zentrale oder von den Netzverzweigungs- und/oder Zwischenverstärkereinrichtungen gesendet wurde.

3. Kommunikationssystem nach Anspruch 2, **dadurch gekennzeichnet, dass** der Zeitrahmen (ZR) einen Zeitschlitz (6) enthält, in welchem die Teilnehmer mit einem Zufallszugriffsverfahren der Zentrale einen Sendewunsch signalisieren können.

4. Kommunikationssystem nach einem oder mehreren der Ansprüche 1 bis 3, **dadurch gekennzeichnet, dass** alle Teilnehmer ihre Daten in Zeitschlitzen (5) übertragen, für welche die Teilnehmer ein Senderecht von der Zentrale erhalten haben.

5. Kommunikationssystem nach einem der Ansprüche 1 bis 4, **dadurch gekennzeichnet, dass** die Rahmensynchronisationen (1, 3) und die Steuerungsdaten (2, 4) unter Verwendung eines Multiträgerverfahrens übertragen werden.

6. Kommunikationssystem nach Anspruch 3 und 4, **dadurch gekennzeichnet, dass** der Zeitschlitz (6) für den Sendewunsch zeitlich den Zeitschlitzen (5) für die Nutzdaten nachgeordnet ist.

7. Kommunikationssystem nach Anspruch 2, **dadurch gekennzeichnet, dass** in mindestens einer Netzverzweigungs- und/oder Zwischenverstärkereinrichtung ein mit der Steuereinrichtung verbundener Rahmengenerator vorgesehen wird, so dass bei Ausfall der Zentrale die Steuereinrichtung die Netzsteuerungsfunktionen übernimmt.

8. Kommunikationssystem nach Anspruch 1, **dadurch gekennzeichnet, dass** im Burst-Signal eine Information zur Kennzeichnung des Nutzinhalts bzw. des Senders eingebettet ist, so dass der Steuereinrichtung eine Authentizitätsprüfung einschließlich einer Wegesteuerung ermöglicht ist.

## Claims

1. Communication system for data transmission in a meshed network with a central station and subscribers connected to it, using a multicarrier transmission method, wherein
- in said central station a transmission signal is combined with a synchronization information (1),
- at the reception side blocks with coded symbols are synchronized,
- time division multiplex signals are used for transmission in the point-to-multipoint direction and burst signals are used for transmission in the multipoint-to-point direction,
- at least one network branch device and/or repeater device is used in said network, comprising a control means connected to a block synchronization and a burst identification device; and
- said network branch devices or repeater devices generates their own frame - synchronization (3), different from frame synchronization of said central station, and unites all bursts in one TDMA signal and afterwards transmits them simultaneously at the same medium, having the same frequency range, thus the respective subscriber receives superimposed frame synchronizations (1, 3) some of that with a time delay.

2. Communication system according to claim 1, wherein only one central station is provided, which transmits in an time frame (ZR) controlling and user data (2, 5) generated by an frame generator, which are received by said network branch devices or repeater devices and which are simultaneously broadcasted, whereas by said central station and said network branch devices or repeater devices a frame synchronization (1, 3) is inserted within the time frame (ZR) before the controlling dates (2, 4), thus whether said frame synchronization (1, 3) is transmitted by said central station or said network branch devices and/or repeater devices can be discriminated.

3. Communication system according to claim 2, wherein said time frame (ZR) has one time slot (6), by which the subscribers can signal randomly to said central station their request for transmission.

4. Communication system, according to one or more of the claims 1 to 3, wherein all subscribers are able to transmit data in time slots (5), for which the subscribers received an authorization for transmission from said central station.

5. Communication system, according to one of the claims 1 to 4, wherein said frame synchronization (1, 3) and said controlling dates (2, 4) are transmitted by a multi-carrier transmission method.

6. Communication system, according to claim 3 and 4, wherein said time slot (6) for said request for transmission follows in time to said data time slots (5).

7. Communication system, according to claim 2, wherein in at least one of the said network branch devices and/or repeater devices a frame generator connected with said control means is provided, so that if said central station falls out, said control means is able to take control functions over the network.

8. Communication system, according to claim 1, wherein the burst-signal contains information for distinguishing user data and transmitter, so that said control means is able to proof authentication and to route control, respectively.

## Revendications

1. Système de communication pour la transmission de données dans un réseau maillé avec un standard et un abonné connecté et l'utilisation d'un mode de transmission à porteuse multiple,
- où au standard une information de synchronisation (1) est ajoutée à un signal d'émission,
- où on synchronise côté récepteur les blocs des symboles de code,
- où la transmission de signaux est effectuée en direction de point à multipoint par un signal TDM (Time Division Multiplex) et en direction de multipoint à point par un paquet de données,
- où au moins une répartition de réseau et/ou un dispositif d'amplificateur intermédiaire est prévu dans le réseau, lesquels possèdent un dispositif de contrôle étant connecté à un dispositif de synchronisation de blocs et de détection de paquets de données,
- où le dispositif de répartition de réseaux ou le dispositif d'amplificateur intermédiaire ont une propre synchronisation de trames de données (3), laquelle peut être distinguée de la synchronisation de trames de données du standard, rassemble les paquets de données à un signal TDMA (Time Division Multiple Access) et après il les émet en même temps dans la même gamme de fréquence sur la même porteuse, par lesquelles l'abonné respectif reçoit la synchronisation de trames de données superposées (1, 3) partiellement avec un chevauchement temporaire.

2. Système de communication selon revendication 1, **caractérisé en ce qu'**un seul standard est prévu dans le système de communication, lequel émet des données de contrôle et des données utiles (2, 5) dans un intervalle de temps (ZR) produit par le générateur de trames de données, lesquelles sont reçu par le dispositif de répartition de réseau et/ou d'amplificateur intermédiaire et en même temps elles sont émises par ce dispositif, où un signal de synchronisation de trames de données (1, 3) est ajoutée dans le intervalle de temps (ZR) avant les données de contrôle (2, 4) du standard et du dispositif de répartition de réseau et/ou d'amplificateur intermédiaire, par laquelle on peut distinguer si la synchronisation de trame de données (1, 3) est émise par le standard ou par le dispositif de répartition de réseau et/ou d'amplificateur intermédiaire.

3. Système de communication selon revendication 2, **caractérisé en ce que** l'intervalle de temps (ZR) contient un slot (6) dans lequel les abonnés peuvent signaliser á l'aide d'un procédé d'accès aléatoire au standard la demande d'émission.

4. Système de communication selon une ou plusieurs revendications 1 jusqu'à 3, **caractérisé en ce que** tous les abonnées transmettent leurs données dans des slots (5) pour lesquels les abonnés obtiennent un droit d'émission du standard.

5. Système de communication selon une des revendications 1 jusqu'à 4, **caractérisé en ce que** la synchronisation de trames de données (1, 3) et les données de contrôle (2, 4) sont transmises en utilisant une mode de transmission à porteuse multiple.

6. Système de communication selon les revendications 3 et 4, **caractérisé en ce que** le slot (6) pour la demande d'émission est émis après le slot (5) pour les données utiles.

7. Système de communication selon revendication 2, **caractérisé en ce que** au moins dans un dispositif de répartition de réseau et/ou d'amplificateur intermédiaire un générateur de trames de données est prévu connecté avec un dispositif de contrôle, de façon qu'il y ait une panne du standard, le dispositif de contrôle assure les fonctions de contrôle de réseau.

8. Système de communication selon revendication 1, **caractérisé en ce qu'**une information pour la caractérisation du contenue utile par exemple de l'émetteur est intégrée dans le paquet de données, pour que le dispositif de commande puisse réaliser une vérification d'authenticité y compris la commande de communication.
